# EUROPÄISCHE PATENTSCHRIFT

(11) **EP 2 095 156 B1**
(45) Veröffentlichungstag und Bekanntmachung des Hinweises auf die Patenterteilung: **20.04.2016**
(21) Anmeldenummer: 07846828.7
(22) Anmeldetag: 27.11.2007
(51) Int. Cl.: G01V 3/15, E02F 9/24, F16L 1/11

(54) **LOKALISIERUNGSSYSTEM FÜR EINE GELÄNDEBEARBEITUNGSMASCHINE**
LOCALIZATION SYSTEM FOR AN EARTHMOVING MACHINE
SYSTÈME DE LOCALISATION POUR ENGIN DE TERRASSEMENT

(30) Priorität: 01.12.2006 CH 19532006
(43) Veröffentlichungstag der Anmeldung: 02.09.2009
(73) Patentinhaber: Leica Geosystems AG, 9435 Heerbrugg (CH)
(72) Erfinder: FLING, Richard, Barton under Needwood Staffordshire DE13 8ET (GB); BRANSON, Simon, Whiston Staffordshire ST10 2HZ (GB)
(74) Vertreter: Kaminski Harmann
(86) Internationale Anmeldenummer: PCT/EP2007/010263
(87) Internationale Veröffentlichungsnummer: WO 2008/064852

(56) Entgegenhaltungen:
- DE-A1- 2 312 814
- US-A- 5 371 959
- US-A- 5 479 729
- US-A1- 2006 265 914
- US-B2- 6 633 163

## Beschreibung

Die Erfindung betrifft ein Lokalisierungssystem zum Lokalisieren eines unterirdischen Objektes für eine Geländebearbeitungsmaschine, nach dem Oberbegriff des Anspruchs 1.

Bei der Durchführung von Erdarbeiten und vor allem von Grabarbeiten ist es notwendig zu wissen, wo unterirdische Objekte, wie unterirdisch verlegte Versorgungsleitungen, vergraben sind, um eine Beschädigung z.B. der Versorgungsleitungen und/oder der verwendeten Geländebearbeitungsmaschinen zu verhindern. Oft sind diese Objekte unvollständig, falsch oder gar nicht dokumentiert. Demzufolge muss das zu bearbeitende Gelände vor Beginn der Erdarbeiten auf unterirdische Objekte untersucht werden. Die Untersuchung erfolgt im Allgemeinen anhand einer Detektion von den Objekten zuordenbaren elektromagnetischen Feldern, beispielsweise mit handelsüblichen handgehaltenen Ortungsgeräten.

Eine solche Gelände-Abtastung ist aber insbesondere für die Bearbeitung grosser Flächen zu zeit- und kostenaufwändig. Daher ist es üblich, Lokalisierungs- oder Ortungsgeräte, wie Kabeldetektoren, direkt an der Geländebearbeitungsmaschine - z.B. einem Bagger - anzubringen und die vergrabenen Objekte im Rahmen der laufenden Erdarbeiten zu erfassen. Um mit grosser Sicherheit zu vermeiden, dass die Objekte beim Graben getroffen werden, werden vorteilhaft Ortungsgeräte verwendet, mittels welchen auch die Tiefe der vergrabenen Objekte bestimmbar ist. Dazu sind Ortungsgeräte bekannt, die zwei entlang-einer Senkrechten auf das Objekt beabstandet angeordnete Antennen aufweisen. Aus den mittels der Antennen erfassten Feld-Verhältnissen und dem bekannten festen Abstand der Antennen ist der Abstand des Objektes zum Ortungsgerät ableitbar. Vorteilhaft werden die Objekt-Daten abgespeichert und aufgezeichnet, womit Gelände-Dokumentationen, wie Karten, erstellt bzw. ergänzt werden können.

Geländebearbeitungsmaschinen, wie z.B. Bagger, sind aus dem Stand der Technik hinlänglich bekannt. Die Erfindung bezieht sich dabei auf Geländebearbeitungsmaschinen mit einem Arbeitsteil - insbesondere einen Baggerarm -, der ein Geländebearbeitungsteil, wie eine Baggerschaufel, aufweist. Das Geländebearbeitungsteil ist dabei beispielsweise an einer unteren Auslegerkomponente des Arbeitsteils schwenkbar befestigt. Insbesondere weist der Arbeitsteil zwei oder drei Glieder als Auslegerkomponenten auf, die mittels hydraulischen Verstellmechanismen bewegt werden können.

Die US 2006/0265914 A1 beschreibt ein System zum Verfolgen einer vorgegebenen Grenze bei Geländebearbeitungsarbeiten, die durch eine Geländebearbeitungsmaschine durchgeführt werden. Dazu sind im Gelände insbesondere unterirdisch Signalsendegeräte angeordnet, die durch ihre Position die Grenze oder einen Grenzbereich festgelegen. Anhand einer Empfängervorrichtung werden die von den Sendegeräten emittierten Signale empfangen und an eine Auswerteeinheit weitergeleitet, wobei die Auswerteeinheit aus den empfangenen Signalen eine Position der Signalsendegeräte und daraus Informationen über die Grenze ableitet. Es wird dabei vorgeschlagen, die Empfängervorrichtung auf der Arbeitsmaschine selbst zu befestigen oder alternativ mobil von der Arbeitsmaschine örtlich getrennt zu positionieren, beispielsweise auf einem weiteren separaten Fahrzeug.

Für den Gebrauch zum Orten beispielsweise einer unterirdischen, ein Magnetfeld erzeugenden Versorgungsleitung ist das in der US 2006/0265914 A1 geoffenbarte System jedoch unbrauchbar, da für eine Detektion einer Versorgungsleitungen sich von einem Sender-Empfänger-System unterscheidende Anforderungen notwendig sind.

In der US 6,633,163 ist eine Geländebearbeitungsmaschine mit zwei an der Maschine unterschiedlich hoch angeordneten Magnetfeld-Detektoren dargestellt. Der Vergleich der Detektor-Messungen liefert Informationen über die Nähe eines Feld-Erzeugers zur Geländebearbeitungsmaschine. Mit dem dargestellten System wird die relative Position des Feld-Erzeugers zur Geländebearbeitungsmaschine bestimmt. Die Bestimmung des Abstandes des Feld-Erzeugers zur Geländebearbeitungsmaschine bzw. der Tiefe des Feld-Erzeugers wird in der genannten US-Patentschrift nicht erwähnt. Weiters ist - aufgrund der Anordnung der Detektoren direkt an der Maschine - das System nur für Geländebearbeitungsmaschinen gut geeignet, die ein Arbeitsteil hinter sich herziehen.

Die US 5,592,092 beschreibt zwei an der Schaufel eines Baggers beabstandet angebrachte Sensoren zur Erfassung von Magnetfeldern unterirdischer Objekte. Aus dem bekannten Abstand der Sensoren zueinander, der Differenz der detektierten Feldbeträge und der Schaufelstellung wird der Abstand der Schaufel zum Objekt abgeleitet. Da die Sensoren an der Baggerschaufel angebracht sind, liegen sie je nach Schaufelstellung nicht senkrecht über dem Objekt. Daher muss die Schaufelstellung bei der Bestimmung des Abstands berücksichtigt werden. Auch besteht - aufgrund der Befestigung direkt an der Schaufel - die Gefahr, dass die Sensoren bei den Baggerarbeiten beschädigt werden.

Die US 5,371,659 beschreibt eine beweglich am Baggerarm angeordnete Detektorkomponente die während des Baggerbetriebs in Richtung einer unterirdischen ein Magnetfeld erzeugenden Versorgungsleitung gerichtet wird.

Die US 5,449,729 beschreibt eine am Baggerarm angeordnete Detektorkomponente ohne offensichtliche Richtungsempfindlichkeit.

Eine Aufgabe der Erfindung ist es, ein verbessertes beschädigungsstabiles Lokalisierungssystem für eine Geländebearbeitungsmaschine bereitzustellen, mittels welchem bei der Durchführung von Erdarbeiten unterirdische Objekte in dem Gelände erfassbar sind, welches durch die jeweilige momentane Stellung und Position des Geländebearbeitungsteils bearbeitet wird oder werden könnte.

Eine weitere Aufgabe ist die Bereitstellung eines beschädigungsstabilen Lokalisierungssystems für eine Geländebearbeitungsmaschine, mittels welchem auch der Abstand zu unterirdischen Objekten bestimmbar ist.

Diese Aufgaben werden durch die Gegenstände des Anspruches 1 oder der abhängigen Ansprüche gelöst bzw. die Lösungen weitergebildet.

Erfindungsgemäss weist ein Lokalisierungssystem für eine Geländebearbeitungsmaschine eine in Richtung des Geländebearbeitungsteils, wie einer Baggerschaufel, zeigende Detektorkomponente mit definierter Detektionsrichtung, eine Rechenkomponente und eine Anzeigekomponente z.B. zum Anzeigen oder Weiterleiten von Abstandsinformationen auf. Die Detektorkomponente ist dabei über eine Befestigungskomponente an einem unteren Glied des Arbeitsteils - an dem das Geländebearbeitungsteil der Maschine befestigt ist - angebracht, sodass die Detektionsrichtung der Detektorkomponente im Wesentlichen parallel zur longitudinalen Richtung des unteren Glieds, das die untere Auslegerkomponente des Arbeitsteils darstellt, ausgerichtet ist. Die Befestigungskomponente ist zur Anordnung, insbesondere lösbaren Befestigung, an der unteren Auslegerkomponente des Baggerarms der Geländebear-beitungsmaschine ausgeführt. Vorteilhaft ist die Befestigungskomponente derart am Arbeitsteil anordenbar, dass die Detektorkomponente möglichst beschädigungssicher positioniert wird. Durch die Anordnung der Detektorkomponente am unteren Glied des Arms, wobei die Detektionsachse parallel zur Längsachse des unteren Glieds ausgerichtet ist, folgt, dass die Detektionsachse und somit die definierte Detektionsrichtung der Detektorkomponente auf das Geländebearbeitungsteil und auf das damit zu bearbeitende Terrain zeigen. Ebenso wird durch diese Anordnungsposition erreicht, dass ein Kontakt und ein Zusammenstoss mit dem Geländebearbeitungsteil oder mit dem Gelände selbst verhindert werden, was ansonsten zu einer Beschädigung des Detektors führen könnte. Damit wird mit einer wenig komplexen und beschädigungsstabilen Anordnung ein Lokalisierungssystem mit einer Detektorkomponente bereitgestellt, welche Objekte in jenem Gelände detektiert, das in der momentanen Stellung und Position des Geländebearbeitungsteils durch selbiges bearbeitet wird oder werden könnte. Ein Abscannen des zu bearbeitenden Geländes als separater Arbeitsgang vor dem Bearbeiten des Geländes ist bei der Verwendung eines erfindungsgemässen Lokalisierungssystems nicht nötig.

Eine vorteilhafte Ausführungsform der Detektorkomponente ist eine Anordnung zweier auf einer Achse entlang der longitudinalen Richtung des unteren Glieds des Arbeitsteils beabstandet angeordneten Antennen, wobei die Detektionsrichtung der Detektorkomponente in Richtung der Achse definiert ist. Da die Antennen auf der Achse beabstandet angebracht sind, sind die detektierten Stärken des von einem Objekt ausgehenden Magnetfeldes an unterschiedlichen Positionen entlang der Achse unterschiedlich hoch. Anhand des Unterschiedes der durch die beiden beabstandeten Antennen detektierten Magnetfeldstärken und des Abstandes der Antennen zueinander ist der Abstand des Objektes zur Detektorkomponente bestimmbar.

Den Objekten zuordenbare elektromagnetische Felder sind z.B. durch Wechselströme erzeugte Magnetfelder oder induzierte Magnetfelder. So können unterirdisch verlegte Versorgungsleitungen, wie Hoch- und Niederspannungsleitungen, Fernmeldeleitungen oder Wasserleitungen, bzw. alternative unterirdische Objekte oft anhand von zeitlich veränderlichen Magnetfeldern der Leitungen geortet werden. Die Magnetfelder werden beispielsweise infolge von Stromflüssen durch die Leitungen erzeugt, wie bei mit Wechselstrom betriebenen Hoch- oder Niederspannungsleitungen. Alternativ stellen die Felder mittels Anlegen elektromagnetischer Signale an die Leitungen erzeugte Felder oder an den Leitungen reflektierte Felder dar. Das Anlegen erfolgt über direktes Anlegen an Strom leitende Versorgungsleitungen oder mittels Induzieren eines Magnetfeldes in der Leitung. Ein magnetisches Wechselfeld einer Strom leitenden Versorgungsleitung kann auch durch Signale von entfernten Transmittern, wie Funksignale von Radiotransmittern, induziert sein. Auch können die Felder von Transmittern an oder in den Leitungen ausgehen. Beispielsweise wird in nicht leitende Versorgungsleitungen, wie tönerne Rohre oder Kunststoffrohre, ein Leiter eingeführt - oder es wird der Leiter neben den Versorgungsleitungen geführt - und mit Wechselstrom gespeist.

Die Stärke des Magnetfeldes ist ein Mass für den Abstand der Quelle - also der Leitung oder des Transmitters - zum Messort. Für einen geraden stromdurchflossenen Leiter nimmt die Stärke des Magnetfeldes umgekehrt proportional mit dem Abstand d ab - B ∼ k/d, im Falle eines magnetischen Dipolfeldes umgekehrt proportional mit der dritten Potenz des Abstandes d - B ∼ k/d³, wobei k eine Proportionalitätskonstante bezeichnet und B den Betrag des Magnetfeldes.

Mittels einer Detektorkomponente mit beabstandeten Antennen, wie vorgängig beschrieben, wird ein Magnetfeld einer Quelle an zwei beabstandeten Messpositionen, also für zwei Abstände zur Quelle, erfasst. Anschliessend kann das Verhältnis der gemessenen Stärken der Felder gebildet werden, sodass sich die Proportionalitätskonstante herauskürzt. Aus den gemessenen Feldern und dem bekannten Relativabstand der Antennen ist dann der Abstand zur Quelle bestimmbar.

Eine Detektorkomponente eines erfindungsgemässen Lokalisierungssystems mit drei - oder mehr - Antennen ermöglicht die Ermittlung des Abstands eines Objektes mit grösserer Genauigkeit als eine Detektorkomponente mit zwei Antennen.

Weist die Detektorkomponente Antennen zum Erfassen des Feldes auf, so können die Antennen ein-, zwei- oder dreiachsige Antennen darstellen, wobei zweiachsige Antennen als x-y-Antennen bezeichnet werden. Anhand mehrachsiger Antennen ist das Feld in mehreren Raumrichtungen erfassbar, sodass nicht nur der Abstand sondern auch ein Richtungsvektor zu einem Objekt bestimmt werden kann und Objekte richtungsunabhängig detektiert werden können.

Die Detektorkomponente des erfindungsgemässen Lokalisierungssystems kann ebenso alternativ zu den Antennen Magnetfeld-Detektoren, wie Magnetometer oder Hall-Sensoren, umfassen.

Die Detektorkomponente kann auch mit einem Sender und Empfänger, insbesondere für Entfernungsmessungen, ausgebildet sein.

Beispielsweise stellt die Detektorkomponente ein Radar dar, wobei die Objekte anhand von einer Sendeeinheit der Detektorkomponente ausgesandter und einer Empfangseinheit der Detektorkomponente empfangener Strahlung detektiert werden.

Gegebenenfalls umfasst die Detektorkomponente zusätzlich einen Laserdistanzmesser, ein GPS System oder andere optische Vermessungssysteme um die Distanz zum-ursprünglichen oder bearbeiteten - Terrain zu messen. Ist anhand der Detektorkomponente der Abstand zu einem Objekt bestimmbar, so kann die Messung der Position der Detektorkomponente respektive des Arbeitsteils relativ zum Terrain verwendet werden, um die Tiefe des Objektes zu bestimmen. Das Arbeitsteil kann dann entsprechend der ermittelten Tiefe gesteuert werden.

Eine Positionsbestimmung -des Arbeitsteils ist auch mit alternativen, in der Maschinensteuerung üblichen, Methoden durchführbar. Bekannt ist beispielsweise, einen Reflektor am Arbeitsteil zu vermessen. Ebenfalls bekannt ist eine Positionsbestimmung - z.B. eines Baggerarms als Arbeitsteil - mittels Neigungs- und Drucksensoren.

Das erfindungsgemässe Lokalisierungssystem ist als Lokalisierungssystem für eine Geländebearbeitungsmaschine ausgebildet. Die Geländebearbeitungsmaschine stellt insbesondere einen Bagger mit einem Baggerarm als Arbeitsteil dar. Üblicherweise ist ein Baggerarm aus mehreren Auslegerkomponenten und einer Baggerschaufel als Geländebearbeitungsteil, die jeweils höhenverstellbar sind, gebildet. Die Auslegerkomponente, an welcher das Geländebearbeitungsteil unmittelbar befestigt ist, wird als untere Auslegerkomponente bezeichnet. An der unteren Auslegerkomponente wird die Befestigungskomponente eines erfindungsgemässen Lokalisierungssystems vorzugsweise derart angebracht, dass sie möglichst nahe an der Schaufel angeordnet ist, aber in keiner Stellung des Baggerarms von der Schaufel getroffen wird.

Die Befestigungskomponente ist beispielsweise als Metallplatte ausgebildet und magnetisch am Arbeitsteil befestigbar. Alternativ kann die Befestigungskomponente als rahmenartige Halterung ausgebildet sein. Ebenso möglich ist eine im Arbeitsteil integrierte Befestigungskomponente, an welcher die Detektorkomponente befestigt werden kann. In einem einfachen Fall besteht die Befestigungskomponente aus einem Seil oder aus Klemmen um die Detektorkomponente am Arbeitsteil zu befestigen. Eine Ausbildung der Befestigungskomponente als Gehäuse ist nützlich für z.B. die Unterbringung der Rechenkomponente und die Unterbringung von Batterien, oder Werkzeugen zum Montieren der Befestigungs- und/oder Detektorkomponente. Ebenso können die Befestigungskomponente und die Detektorkomponente in einem gemeinsamen Gehäuse angeordnet sein.

Das erfindungsgemässe Lokalisierungssystem umfasst weiters eine Anzeigekomponente zum Anzeigen der Detektion der Detektorkomponente. Stellt die Detektion lediglich das Erfassen eines elektromagnetischen Feldes dar, so kann die Anzeigekomponente beim Erfassen ein Warnsignal erzeugen. Das Warnsignal ist beispielsweise ein akustisches oder optisches Signal für einen Benutzer, wie einen Baggerfahrer. Zusätzlich oder alternativ kann das Warnsignal ein Signal für eine Steuereinrichtung der Geländebearbeitungsmaschine darstellen, wodurch z.B. die Bewegung der Maschine und/oder deren Arbeitsteils gestoppt wird.

Gegebenenfalls umfasst das erfindungsgemässe Lokalisierungssystem eine Rechenkomponente. Mittels der Rechenkomponente wird die Detektion der Detektorkomponente weiterverarbeitet. Beispielsweise wird aus der Detektion der Abstand zum Objekt abgeleitet und gegebenenfalls abgespeichert. Die Rechenkomponente kann über entsprechende Schnittstellen mit der Anzeigekomponente kommunizieren, welche dann die mittels der Rechenkomponente abgeleiten Informationen, wie Abstandsinformationen, anzeigt bzw. weiterleitet.

Zur Anzeige für einen Benutzer ist die Anzeigekomponente z.B. als graphisches Display ausgebildet und in einer Fahrerkabine angeordnet. Auf dem Display ist die Detektion als Warnsignal, beispielsweise mittels blinkender bzw. leuchtender Lampen, darstellbar. Die Abstandsinformation kann bildlich in einem Geländemodell, mit Anzeigelampen oder als Zahlenwerte dargestellt werden. Zusätzlich oder alternativ kann ein akustischer Alarm vorgesehen sein.

Die Rechenkomponente ist z.B. ein Mikroprozessor. Weiters kann der Rechen- oder Anzeigekomponente ein Controller zugeordnet sein.

Detektorkomponente, Anzeigekomponente, sowie gegebenenfalls Rechenkomponente und gegebenenfalls Controller weisen jeweils Einrichtungen zur Kommunikation auf. Die Einrichtungen können Kabelverbindungen oder kabellose Schnittstellen, wie Bluetooth oder CANBUS, darstellen. Beispielsweise kommunizieren die Komponenten auch über Funk-Signale. Die Kommunikation erfolgt unter den einzelnen Komponenten. Die Kommunikation kann weiters zu externen Einrichtungen, wie einem von einem Benutzer bedienten Steuersystem, oder zu Steuereinrichtungen der Geländebearbeitungsmaschine erfolgen.

Das erfindungsgemässe Lokalisierungssystem wird nachfolgend anhand von in den Zeichnungen schematisch dargestellten Ausführungsbeispielen rein beispielhaft näher beschrieben oder erläutert. Im Einzelnen zeigen
- Figur 1: einen Bagger als Geländebearbeitungsmaschine mit einer erfindungsgemäss angeordneten Befestigungs- und Detektorkomponente;
- Figur 2: einen Baggerarm, welcher sich in einer Arbeitsposition befindet, mit Komponenten eines erfindungsgemässen Lokalisierungssystems;
- Figur 3: einen Baggerarm, welcher sich in einer weiteren Arbeitsposition befindet, mit Komponenten eines erfindungsgemässen Lokalisierungssystems;
- Figur 4: eine Detektorkomponente mit zwei entlang einer Achse angeordneten x-y-Antennen und den daraus folgenden Detektionskegel, innerhalb welchem Objekte detektiert werden;
- Figur 5: einen Bagger mit einer Befestigungs-, einer Detektor- und einer Anzeigekomponente eines erfindungsgemässen Lokalisierungssystems;
- Figur 6: ein weiteres Ausführungsbeispiel eines erfindungsgemässen Lokalisierungssystems;
- Figur 7: in vier Teilfiguren Ausführungsbeispiele betreffend Komponenten eines erfindungsgemässen Lokalisierungssystems; und
- Figur 8: ein Ausführungsbeispiel für eine Anzeigekomponente eines erfindungsgemässen Lokalisierungssystems.

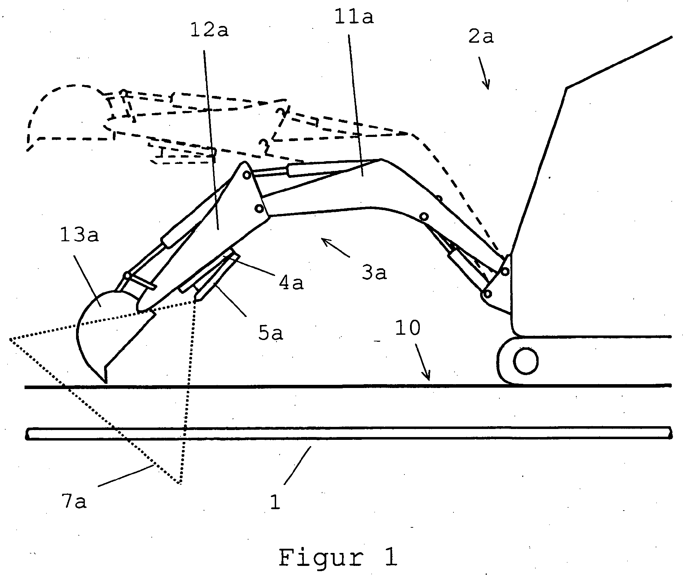

In Figur 1 ist ein Bagger 2a als Geländebearbeitungsmaschine mit einem erfindungsgemässen Lokalisierungssystem dargestellt. Der Bagger 2a fährt über ein Terrain 10, an welchem Grabarbeiten durchgeführt werden sollen. Die Grabarbeiten erfolgen z.B. im Rahmen der Erstellung einer Strasse oder der Verlegung von Leitungen bzw. Rohren. Unter dem zu bearbeitenden Terrain ist bereits eine Versorgungsleitung 1 als unterirdisches Objekt verlegt, wobei von der Versorgungsleitung 1 ein elektromagnetisches Feld ausgeht. Der Bagger 2a weist als Arbeitsteil einen Baggerarm 3a mit einer oberen Auslegerkompönente 11a, einer unteren Auslegerkomponente 12a und einer Baggerschaufel 13a, die jeweils mittels hydraulischer Zylinder höhenverstellbar sind, auf. An der unteren Auslegerkomponente 12a sind als Komponenten des erfindungsgemässen Lokalisierungssystems eine Befestigungskomponente 4a, die hier als magnetisch an der zweiten Auslegerkomponente befestigtes Gehäuse ausgebildet ist, und eine Detektorkomponente 5a angeordnet. Die Detektorkomponente 5a ist an der Befestigungskomponente 4a derart angeordnet, dass die Detektionsachse und somit die Detektionsrichtung der Detektorkomponente 5a im Wesentlichen parallel zur longitudinalen Richtung der unteren Auslegerkomponente 12a ist. Dadurch zeigt die Detektionsrichtung stets in Richtung der Baggerschaufel 13a und in Richtung des mit der Baggerschaufel 13a zu bearbeitenden Geländes. Die Detektorkomponente 5a ist zur Detektion elektromagnetischer Strahlung ausgebildet. Sobald Strahlung detektiert wird, wird die Entfernung der Quelle mittels der in der - als Gehäuse ausgebildetenBefestigungskomponente 4a angeordneten Rechenkomponente berechnet und die Information z.B. an die - hier nicht dargestellte - Anzeigekomponente oder an eine Steuereinrichtung des Baggers 2a weitergeleitet. Das Weiterleiten erfolgt über Funk - z.B. über Bluetooth-Schnittstellen. Anzeigekomponente, Detektorkomponente 5a und Befestigungskomponente 4a könnten auch in einem gemeinsamen Gehäuse angeordnet sein.

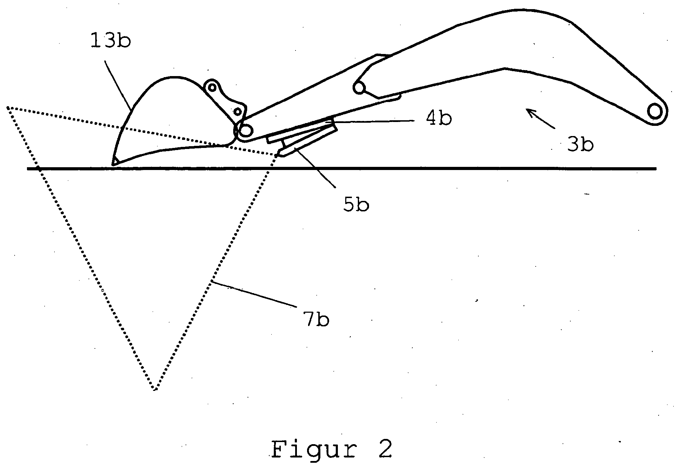

Die Darstellung der Figur 2 zeigt einen Baggerarm 3b in einer Arbeitsposition mit Komponenten eines erfindungsgemässen Lokalisierungssystems. Aus der Darstellung wird ersichtlich, dass die Anordnung der Detektorkomponente 5b des Lokalisierungssystems derart erfolgt, dass diese möglichst nahe der Baggerschaufel 13b angeordnet ist, jedoch so weit entfernt, dass sie von der Schaufel nicht getroffen wird. Weiters wird der Detektionskegel 7b gezeigt, innerhalb welchem Objekte detektiert werden können. Dabei wird jeweils das Gelände gescannt, welches in der momentanen Stellung der Baggerschaufel 13b bearbeitet wird oder werden könnte.

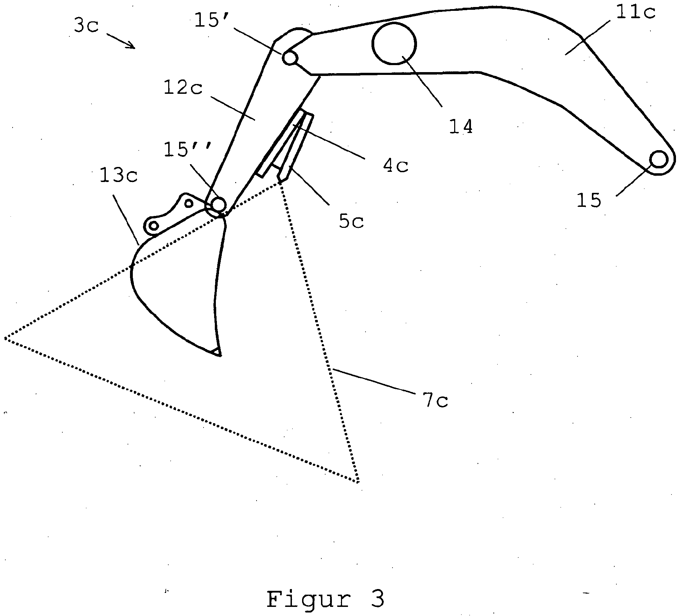

Figur 3 zeigt einen Baggerarm 3c in einer weiteren Arbeitsposition mit Komponenten des Lokalisierungssystems. Weiters ist ein reflektives Element 14 angebracht. Das reflektive Element 14 kann mit einem Tachymeter angemessen und so die Position des Elements bestimmt werden. Dem Baggerarm 3c sind weitere Sensoren zugeordnet: Den - nicht dargestellten - hydraulischen Zylindern zum Verstellen der oberen Auslegerkomponente 11c und der unteren Auslegerkomponente 12c des Baggerarms 3c, sowie der Baggerschaufel 13c, sind jeweils Drucksensoren 15, 15' 15" zugeordnet. Weiters ist der oberen Auslegerkomponente 11d, der unteren Auslegerkomponente 12d und der Baggerschaufel 13c jeweils ein Neigungssensor zugeordnet. Die Neigungssensoren sind nicht dargestellt. Mittels des reflektiven Elements 14 und der Sensoren kann die Position der Schaufel-Unterkante aus der Position des reflektiven Elements 14 und den Neigungsinformationen anhand einfacher Geometrie berechnet werden. Wird nun über das Lokalisierungssystem der Abstand zu einem unterirdischen Objekt ermittelt, kann mit der Kenntnis der Position des Baggerarms 3d - und damit der Detektorkomponente 5c, die in einer festen Positionsbeziehung zum Baggerarm 3c steht-die Tiefe des Objektes bestimmt werden.

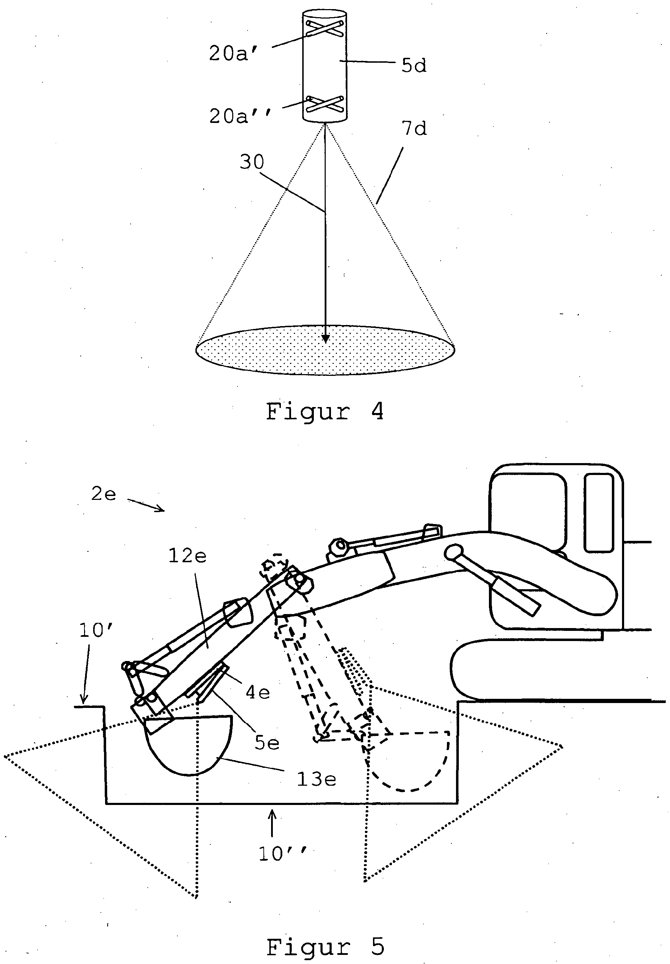

Figur 4 zeigt ein Ausführungsbeispiel einer erfindungsgemässen Detektorkomponente 5d mit zwei auf einer Achse beabstandet angeordneten x-y-Antennen 20a' und 20a" , wodurch die Detektionsrichtung 30 der Detektorkomponente 5d entlang der Achse definiert wird,und den Detektionskegel 7d, innerhalb welchem Objekte detektiert werden.

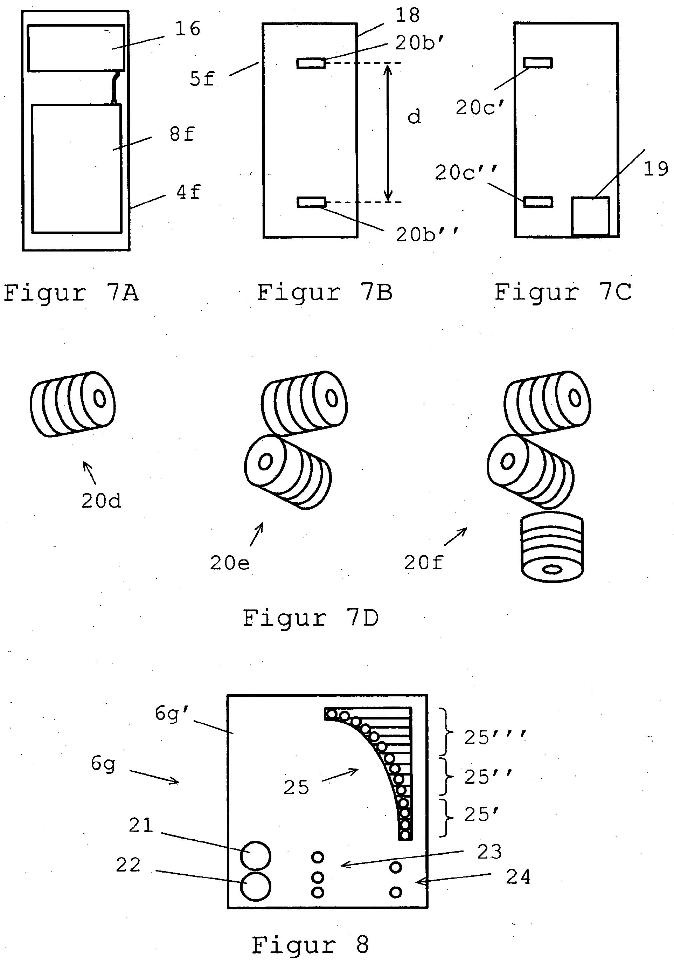

In Figur 5 wird ein Aushub in einem Terrain 10' mittels des Baggers 2e durchgeführt. Am Baggerarm ist an der unteren Auslegerkomponente 12e, die mit der Schaufel 13e drehbar verbunden ist, über die Befestigungskomponente 4e die Detektorkomponente 5e angeordnet. Die Detektorkomponente 5e ist entsprechend der nachfolgenden Figur 7C mit Antennen und einem Laserdistanzmesser versehen. Indem mit dem Laserdistanzmesser die Distanz zum Terrain - hier z.B. zum ausgehobenen Terrain 10" - gemessen wird, kann aus einem aus den Detektionsdaten der Detektorkomponente 5e berechneten Abstand eines erfassten Objektes auch die Tiefe des Objektes bestimmt werden. Aus der Darstellung geht hervor, dass die Anordnung der Detektorkomponente 5e über das Verbindungselement 7e und die Befestigungskomponente 4e an der Auslegerkomponente 12e derart ist, dass die Detektorkomponente 5e auch in einer Endposition der Schaufel 13e von dieser nicht getroffen wird - und damit gegen Beschädigung durch die Schaufel 13e geschützt ist. Beim Transport des_Baggers - wenn der Bagger also nicht aktiv eingesetzt wird - kann die Detektorkomponente 5e und ggf. die weiteren Komponenten z.B. zum Schutz gegen Diebstahl einfach abgenommen werden.

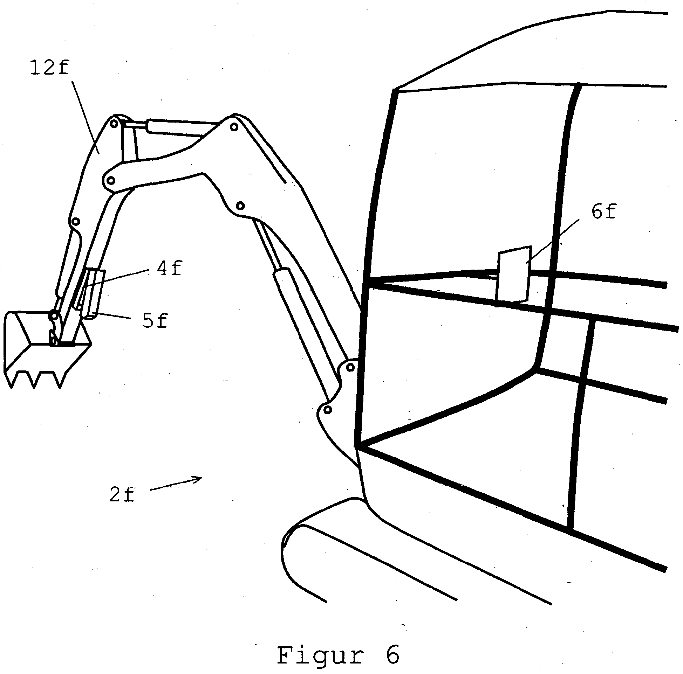

Figur 6 zeigt ein Ausführungsbeispiel eines erfindungsgemässen Lokalisierungssystems mit einer als Gehäuse 4f für die Rechenkomponente ausgebildeten Befestigungskomponente. Am Gehäuse 4f ist die Detektorkomponente 5f angeordnet. Die Befestigungskomponente ist - entsprechend den vorherigen Figuren - an der unteren Auslegerkomponente 12f des Baggers 2f angebracht. Das Gehäuse 4f als Befestigungskomponente weist an der Gehäuse-Rückwand Magnetstreifen auf, über welche es magnetisch an der vorderen Auslegerkomponente 12f befestigt ist. Die magnetische Befestigbarkeit ermöglicht eine schnelle und einfache Montage und Abnahme des Gehäuses 4f. In der Fahrerkabine des Baggers 2f ist eine Anzeigekomponente 6f, die ein graphisches Display umfasst, angeordnet. Die Anzeigekomponente 6f. ist beispielsweise entsprechend dem nachfolgend in Figur 8 gezeigten Ausführungsbeispiel ausgebildet.

Figur 7A zeigt etwas detaillierter eine Ausführungsform der Befestigungskomponente 4f, welche als Gehäuse für ein Batteriefach 16, sowie eine Rechenkomponente 8f ausgebildet ist.

Figur 7B zeigt die Detektorkomponente 5f, welche eine erste Antenne 20b' und eine zweite Antenne 20b" aufweist, welche Antennen in einem bekannten Achsabstand d zueinander in einem Gehäuse 18 angeordnet sind. In Figur 7C ist ein Ausführungsbeispiel einer Detektorkomponente dargestellt, die ebenfalls eine erste und zweite, in einem festen Abstand zueinander angeordnete Antennen 20c' und 20c" , sowie zusätzlich einen Laserdistanzmesser 19 aufweist. Die Antennen sind beispielsweise jeweils mit einer Spule bzw. mit mehreren Spulen als die einachsige Antenne 20d, die x-y-Antenne 20e oder die dreiachsige Antenne 20f aus Figur 7D ausgeführt. Ein zeitlich veränderliches Magnetfeld eines unterirdischen Leiters induziert eine Spannung zwischen den Enden der Spule bzw. der Spulen der Antennen, welche induzierte Spannung vom Betrag des Magnetfeldes abhängt. Aus den Antennen-Ausgaben wird in der Rechenkomponente 8f ein Abstandswert des Leiters abgeleitet. Das Ableiten kann beispielsweise einfach ein Zuordnen eines Abstandswertes zu den Antennen-Ausgaben darstellen.

In Figur 8 ist ein Ausführungsbeispiel für eine Anzeigekomponente 6g eines erfindungsgemässen Lokalisierungssystems dargestellt. Die Anzeigekomponente 6g weist ein graphisches Display 6g' auf und ist als Anzeige- und Steuereinheit ausgebildet. Auf dem graphischen Display 6g' ist eine Vielzahl von LED's als visuelle Anzeigemittel, sowie mehrere Schaltknöpfe zum Wählen von Einstellungen ausgebildet. Die Schaltknöpfe umfassen hier eine "mute"-Schaltknopf 21 zum Stummstellen eines akustischen Alarms, der zusätzlich zu den visuellen Alarmsignalen vorgesehen ist. Mit einem weiteren Schaltknopf 22 kann das Lokalisierungssystem auf "stand by" oder "active" geschalten werden. Zu den Schaltknöpfen gehörige LED's 23 zeigen durch Aufleuchten an, welche Einstellung aktiv ist. Zwei weitere LED's 24 zeigen den Batteriestand der Rechenkomponente 8f und Detektorkomponente 5f, sowie des Displays 6g' an. Die LED's 25 im oberen Bereich des Displays 6g' stellen eine visuelle Anzeige von Abstandsinformation bzgl. eines detektierten unterirdischen Objekts dar. Sie sind in drei Farbabschnitte - grün, gelb, rot - unterteilt. Leuchten die grünen LED's 25', so ist ein unterirdisches Objekt detektiert, das sich jedoch noch in einem Abstand von mehr als 30 cm befindet. Das Aufleuchten der gelben LED's 25" indiziert, dass das Objekt nun einen Abstand von weniger als 30 cm einnimmt. Beim Leuchten der roten LED's 25''' ist das Objekt weniger als 10 cm entfernt und es herrscht höchste Alarmstufe.

## Patentansprüche

1. Lokalisierungssystem zum Lokalisieren eines unterirdischen Objektes (1), wie einer Versorgungsleitung, für eine Geländebearbeitungsmaschine (2a,2b), die ein Arbeitsteil (3a), insbesondere einen Baggerarm (3b,3c,3d), aus mindestens einer unteren Auslegerkomponente (12a,12c,12e,12f) und einem Geländebearbeitungsteil (13a,13b,13c,13e) aufweist, mit
▪ einer Befestigungskomponente (4a,4b,4c,4e,4f),
▪ einer an der Befestigungskomponente (4a,4b,4c,4e,4f) mittel- oder unmittelbar angeordneten Detektorkomponente (5a,5b,5c,5d,5e,5f) zur Detektion des Objektes (1) anhand eines dem Objekt (1) zuordenbaren elektromagnetischen Feldes,
▪ gegebenenfalls einer Rechenkomponente (8f) zum Auswerten des Detektorsignals, insbesondere zum Ableiten und Speichern von Abstandsinformationen bezüglich des Objektes (1), und
▪ einer Anzeigekomponente (6f,6g), um das Detektiorsignal und/oder die Auswertungen des Detektorsignals, insbesondere die Abstandsinformationen, anzuzeigen bzw. weiterzuleiten,
**dadurch gekennzeichnet, dass**
die Detektorkomponente eine definierte Detektionsrichtung (30) aufweist und mittels der Befestigungskomponente derart an der unteren Auslegerkomponente (12a,12c,12e,12f) angeordnet ist, dass die Detektionsrichtung (30) im Wesentlichen parallel zur longitudinalen Richtung der unteren Auslegerkomponente (12a,12c,12e,12f) ausgerichtet ist und in Richtung des
Geländebearbeitungsteils (13a,13b,13c,13e) zeigt.

2. Lokalisierungssystem nach Anspruch 1,
**dadurch gekennzeichnet, dass**
die Detektorkomponente (5e,5f) eine erste Antenne (20b',20c') und zweite Antenne (20b" ,20c") zum Erfassen des elektromagnetischen Feldes aufweist, welche Antennen auf einer die Detektionsrichtung (30) definierenden Achse im Wesentlichen parallel zur longitudinalen Richtung der unteren Auslegerkomponente (12a,12c,12e,12f) in einem festen Abstand zueinander derart angeordnet sind, dass aus dem Verhältnis hinsichtlich der Stärken des mittels der ersten Antenne (20b',20c') und zweiten Antenne (20b" ,20c") erfassten Feldes der Abstand der Detektorkomponente (5e,5f) zum Objekt (1) ableitbar ist.

3. Lokalisierungssystem nach Anspruch 2,
**dadurch gekennzeichnet, dass**
die erste und die zweite Antenne als x-y-Antennen (20a',20a" ,20e) ausgebildet sind.

4. Lokalisierungssystem nach einem der vorangehenden Ansprüche,
**dadurch gekennzeichnet, dass**
die Befestigungskomponente (4a,4f) und die Detektorkomponente in einem gemeinsamen Gehäuse angeordnet sind.

5. Lokalisierungssystem nach einem der vorangehenden Ansprüche,
**dadurch gekennzeichnet, dass**
die Befestigungskomponente (4a,4f) magnetisch befestigbar ausgebildet ist.

6. Lokalisierungssystem nach einem der vorangehenden Ansprüche,
**dadurch gekennzeichnet, dass**
die Anzeigekomponente (6f,6g) die Detektion und/oder die Abstandsinformation
▪ einem Benutzer anzeigt und weiters öder alternativ
▪ an eine Steuereinrichtung der Geländebearbeitungsmaschine (2a,2b), beispielsweise eine Betätigungseinrichtung des Arbeitsteils (3a), weiterleitet.

7. Lokalisierungssystem nach einem der vorangehenden Ansprüche,
**dadurch gekennzeichnet, dass**
die Anzeigekomponente (6f,6g) ein graphisches Display (6g') aufweist.

8. Lokalisierungssystem nach einem der vorangehenden Ansprüche,
**dadurch gekennzeichnet, dass**
die Anzeigekomponente (6g)
▪ visuelle Anzeigemittel, wie LED's, (25), und/oder
▪ akustische Anzeigemittel
aufweist.

9. Lokalisierungssystem nach einem der vorangehenden Ansprüche,
**dadurch gekennzeichnet, dass**
die Befestigungskomponente (4a,4f) als Gehäuse (4a,4f) für
- die Rechenkomponente (8f) und/oder
- die Anzeigekomponente
ausgebildet ist.

10. Lokalisierungssystem nach einem der vorangehenden Ansprüche,
**dadurch gekennzeichnet, dass** ein Entfernungsmesser vorgesehen ist, welcher dem Lokalisierungssystem zugeordnet ist, und insbesondere an der Detektorkomponente (5e) angeordnet ist.

## Claims

1. Localization system for localizing an underground object (1), such as a supply line, for an earth-moving machine (2a, 2b) which has a working part (3a), in particular an excavator arm (3b, 3c, 3d), comprising at least one lower boom component (12a, 12c, 12e, 12f) and an earth-moving part (13a, 13b, 13c, 13e), comprising
▪ a fastening component (4a, 4b, 4c, 4e, 4f),
▪ a detector component (5a, 5b, 5c, 5d, 5e, 5f) arranged indirectly or directly on the fastening component (4a, 4b, 4c, 4e, 4f) and intended for detecting the object (1) on the basis of an electromagnetic field which can be assigned to the object (1),
▪ optionally an arithmetic component (8f) for evaluating the detector signal, in particular for deriving and storing distance information with regard to the object (1), and
▪ a display component (6f, 6g) for displaying or forwarding the detector signal and/or the evaluations of the detector signal, in particular the distance information,
**characterized in that** the detector component has a defined detection direction (30) and is arranged by means of the fastening component on the lower boom component (12a, 12c, 12e, 12f) in such a way that the detection direction (30) is aligned substantially parallel to the longitudinal direction of the lower boom component (12a, 12c, 12e, 12f) and points in the direction of the earth-moving part (13a, 13b, 13c, 13e).

2. Localization system according to Claim 1, **characterized in that** the detector component (5e, 5f) has a first antenna (20b', 20c') and second antenna (20b" , 20c") for detecting the electromagnetic field, which antennae are arranged on an axis defining the detection direction (30), substantially parallel to the longitudinal direction of the lower boom component (12a, 12c, 12e, 12f) at a fixed distance relative to one another, in such a way that the distance from the detector component (5e, 5f) to the object (1) can be derived from the ratio of the strengths of the field detected by means of the first antenna (20b', 20c') and second antenna (20b" , 20c").

3. Localization system according to Claim 2, **characterized in that** the first and the second antenna are in the form of x-y antennae (20a', 20a", 20e).

4. Localization system according to any of the preceding claims, **characterized in that** the fastening component (4a, 4f) and the detector component are arranged in a common housing.

5. Localization component according to any of the preceding claims, **characterized in that** the fastening component (4a, 4f) is formed so as to be magnetically fastenable.

6. Localization system according to any of the preceding claims, **characterized in that** the display component (6f, 6g)
▪ displays the detection and/or the distance information to a user and furthermore or alternatively
▪ forwards the detection and/or the distance information to a control device of the earth-moving machine (2a, 2b), for example an actuating device of the working part (3a).

7. Localization system according to any of the preceding claims, **characterized in that** the display component (6f, 6g) has a graphic display (6g').

8. Localization system according to any of the preceding claims, **characterized in that** the display component (6g) has
▪ visual display means, such as LEDs (25), and/or
▪ acoustic display means.

9. Localization system according to any of the preceding claims, **characterized in that** the fastening component (4a, 4f) is in the form of a housing (4a, 4f) for
- the arithmetic component (8f) and/or
- the display component.

10. Localization system according to any of the preceding claims, **characterized in that** a rangefinder which is coordinated with the localization system and in particular is arranged on the detector component (5e) is provided.

## Revendications

1. Système de localisation pour localiser un objet souterrain (1) comme une conduite d'alimentation, pour un engin de terrassement (2a, 2b) qui présente une pièce de travail (3a), en particulier un bras de pelleteuse (3b, 3c, 3d), composé par au moins une partie de flèche inférieure (12a, 12c, 12e, 12f) et une pièce de travail de terrassement (13a, 13b, 13c, 13e), avec
• un composant de fixation (4a, 4b, 4c, 4e, 4f),
• un composant de détecteur (5a, 5b, 5c, 5d, 5e, 5f) placé directement ou indirectement sur le composant de fixation (4a, 4b, 4c, 4e, 4f) pour la détection de l'objet (1) à l'aide d'un champ électromagnétique qui peut être assigné à l'objet (1),
• le cas échéant un composant de calcul (8f) pour exploiter le signal du détecteur, en particulier pour dériver et mémoriser des informations de distance par rapport à l'objet (1) et
• un composant d'affichage (6f, 6g) pour afficher ou transmettre le signal de détecteur, en particulier les informations de distance,
**caractérisé en ce que** le composant de détecteur présente une direction de détection définie et est placé à l'aide du composant de fixation sur la partie de flèche inférieure (12a, 12c, 12e, 12f) de telle manière que la direction de détection (30) est orientée substantiellement parallèlement au sens longitudinal de la partie de flèche inférieure (12a, 12c, 12e, 12f) et est tournée en direction de la partie de travail de terrassement (13a, 13b, 13c, 13e).

2. Système de localisation selon la revendication 1, **caractérisé en ce que** le composant de détecteur (5e, 5f) présente une première antenne (20b', 20c') et une seconde antenne (20b", 20c") pour détecter le champ électromagnétique, lesquelles antennes sont placées sur un axe qui définit la direction de détection (30) substantiellement parallèlement au sens longitudinal de la partie de flèche inférieure (12a, 12c, 12e, 12f) à une distance fixe l'une par rapport à l'autre de telle manière que la distance du composant de détecteur (5e, 5f) par rapport à l'objet (1) peut être dérivée du rapport des intensités du champ détecté au moyen de la première antenne (20b', 20c') et de la seconde antenne (20b", 20c").

3. Système de localisation selon la revendication 2, **caractérisé en ce que** la première et la seconde antenne sont configurées comme des antennes x-y (20a', 20a", 20e).

4. Système de localisation selon l'une des revendications précédentes, **caractérisé en ce que** le composant de fixation (4a, 4f) et le composant de détecteur sont placés dans un boîtier commun.

5. Système de localisation selon l'une des revendications précédentes, **caractérisé en ce que** le composant de fixation (4a, 4f) est configuré pouvant être fixé magnétiquement.

6. Système de localisation selon l'une des revendications précédentes, **caractérisé en ce que** le composant d'affichage (6f, 6g) affiche la détection et/ou les informations de distance
• à un utilisateur et en plus ou en alternative
• transmet à un dispositif de commande de l'engin de terrassement (2a, 2b), par exemple à un dispositif de confirmation de la pièce de travail (3a).

7. Système de localisation selon l'une des revendications précédentes, **caractérisé en ce que** le composant d'affichage (6f, 6g) présente un affichage graphique (6g').

8. Système de localisation selon l'une des revendications précédentes, **caractérisé en ce que** le composant d'affichage (6g) présente
• des moyens d'affichage visuels comme des LED (25) et/ou
• des moyens d'affichage acoustiques.

9. Système de localisation selon l'une des revendications précédentes, **caractérisé en ce que** le composant de fixation (4a, 4f) est configuré comme un boîtier (4a, 4f) pour
- le composant de calcul (8f) et/ou
- le composant d'affichage.

10. Système de localisation selon l'une des revendications précédentes, **caractérisé en ce qu'**il est prévu un télémètre qui est assigné au système de localisation et qui est placé en particulier sur le composant de détecteur (5e).
